(19) **Europäisches Patentamt**
**European Patent Office**
**Office européen des brevets**

(11) **EP 2 666 107 B1**

(12) **EUROPEAN PATENT SPECIFICATION**

(45) Date of publication and mention
of the grant of the patent:
**06.03.2019 Bulletin 2019/10**

(51) Int Cl.:
***G06F 16/11*** *(2019.01)* ***G06F 16/188*** *(2019.01)*

(21) Application number: **12702211.9**

(86) International application number:
**PCT/EP2012/050823**

(22) Date of filing: **20.01.2012**

(87) International publication number:
**WO 2012/098211 (26.07.2012 Gazette 2012/30)**

(54) **METHOD FOR BACKWARD-COMPATIBLE AGGREGATE FILE SYSTEM OPERATION PERFORMANCE IMPROVEMENT, AND RESPECTIVE APPARATUS**

VERFAHREN ZUR VERBESSERUNG DER LEISTUNG EINES RÜCKWÄRTSKOMPATIBLEN AGGREGATDATEISYSTEMS UND ENTSPRECHENDE VORRICHTUNG

PROCÉDÉ D'AMÉLIORATION DES PERFORMANCES D'EXPLOITATION D'UN SYSTÈME DE FICHIERS AGRÉGÉS RÉTROCOMPATIBLES, ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.01.2011 EP 11447001**

(43) Date of publication of application:
**27.11.2013 Bulletin 2013/48**

(73) Proprietor: **Thomson Licensing
92130 Issy-les-Moulineaux (FR)**

(72) Inventors:
• **VANDERHALLEN, Frank
3621 Lanaken (BE)**

• **CHANET, Dominique
9300 Aalst (BE)**
• **FREDERIX, Guy
8560 Gullegern (BE)**
• **HAESAERTS, Kristl
1820 Melsbroek (BE)**

(74) Representative: **Huchet, Anne et al
InterDigital CE Patent Holdings
20, rue Rouget de Lisle
92130 Issy-les-Moulineaux (FR)**

(56) References cited:
**WO-A1-2006/059864     US-A1- 2008 098 023
US-B1- 7 685 596**

**Description**

**TECHNICAL FIELD**

The invention relates to a method for operating a file system comprising a file directory, and to an apparatus, in particular a residential gateway, using the method.

**BACKGROUND OF THE INVENTION**

Residential gateways connecting a residential network of an end-user to the Internet are widely used in the meanwhile. A residential gateway usually provides broadband services over a digital subscriber line (DSL) and telephone communication known as POTS (plain old telephone service), and comprises in addition wired transmission, e.g. Ethernet, and wireless transmission (Wi-Fi) for the residential network. For providing the services, the residential gateway includes a microprocessor system (CPU) running on a Unix-like operating system.

The operating system includes applications and utilities along with a master control program, the kernel. The kernel provides services to start and stop programs, handles the file systems and other common "low level" tasks that most applications share, and schedules access to avoid conflicts between applications. To mediate such access, the kernel has special rights, reflected in a separation of its virtual memory between user space and system space. System space is strictly reserved for running the kernel, kernel extensions, and most device drivers. In contrast, user space is the memory area where all user mode applications work and this memory can be swapped out when necessary.

A key concept for file systems is that they have a fixed application programming interface (API), which makes file systems of different kinds interoperable. For an application making use of a file system, the format of the file system, e.g. FAT32, NTFS, Ext3, ..., makes no difference, and the application should not care about this either. For Unix-like operating systems, the API of the file system conforms to the Portable Operating System Interface (POSIX) standard, which is a family of standards specified by the IEEE.

While the file system API makes interoperability between file systems trivial, which is a real advantage, this can be a weakness for some applications as well. Some very basic operations are not possible directly and have to be emulated with the available functions of the API, which can be very costly in terms of resources.

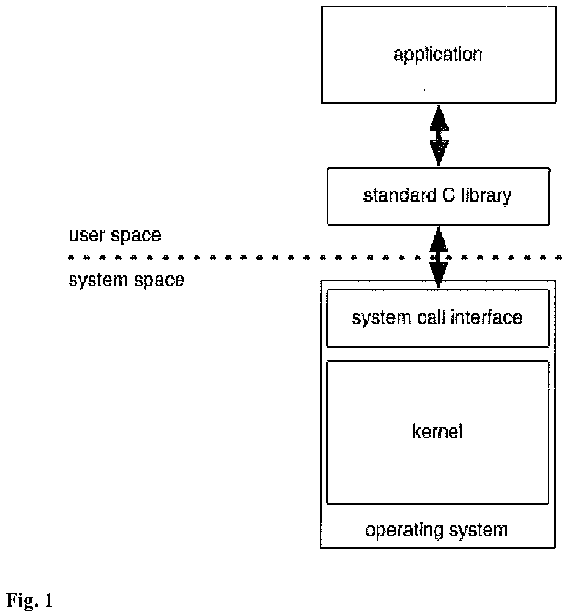

File systems are part of the operating system and as such, they operate in the system space. Applications on the other hand operate in the less privileged user space. To cross the boundary between the user space and the system space, the operating system provides a system call interface, as illustrated in Fig. 1. A system call is how an application requests a service from the kernel of the operating system. In general, there is an intermediate library which makes the system calls as used by the operating system accessible to the user space by means of functions, e.g. a standard C library.

When an application invokes a system call directly, or calls a function from a library which will invoke a system call, a transition between the user space and the system space is required. One common way to make the transition from user space to system space is by means of software interrupts, although other implementations exist. With the software interrupt implementation, the number of the system call has to be loaded in a register of the microprocessor, and a software interrupt is executed to transfer control to the kernel.

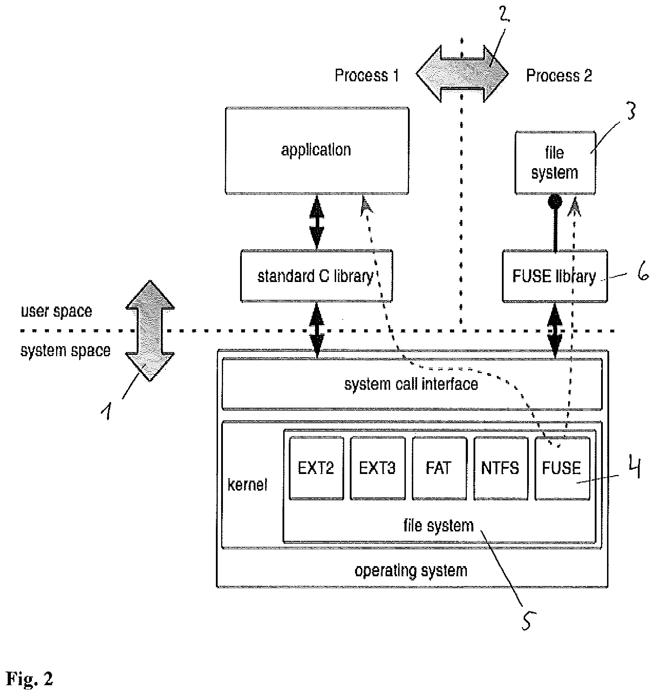

Since file systems reside in the privileged system space, they cannot make use of any libraries. As such, implementing a file system is very complicated. For instance, memory management is much harder in system space than it is in user space. To overcome this limitation, file systems can be implemented in user space as well. One example of an implementation to allow a file system implementation in user space is Filesystem in Userspace (FUSE). FUSE is a loadable kernel module for Unix-like computer operating systems. It comprises a FUSE kernel driver 4, which acts similar to a normal file system 5, and a FUSE library 6 for the communication between a file system 3 in user space and the FUSE kernel driver 4, as illustrated in Fig. 2. The file system implementation, which resides in the user space, is responsible for implementing the interface of the file system. FUSE allows therefore running of file system code in user space while the FUSE kernel driver 4 provides the bridge to the kernel of the operating system.

When an application is interacting with a file system 3 that is implemented in user space, the respective system calls are initiated as with any file system that resides in system space. Inside the kernel, the system calls are processed by the FUSE kernel driver 4. The FUSE kernel driver 4 serializes a system call and propagates it via a FUSE character device back to the user space, where the FUSE library 6 invokes the corresponding functions which are implemented by the file system 3 in user space. The return path follows the same path in reversed order.

FUSE is only one example of an implementation that allows to implement file systems in user space, but what should be emphasized here is that all kinds of file systems in user space require context switches. A context switch is the computing process of storing and restoring the state of a microprocessor so that execution can be resumed from the same point at a later time. This enables multiple processes to share a single CPU and the context switch is an essential feature of a multitasking operating system. Context switches are usually computationally intensive and much of the design of operating systems is to optimize the use of context switches. A context switch can be a register context switch, a task context switch, a thread context switch, or a process context switch.

A process context switch is a transition of control from one process to another. Making such a context switch involves storing the state of the first process, such that it can be resumed later, and initiating the state of the second process. For an implementation of a file system 3 in user space, each of the system calls results in two context switches: the application making the system call is suspended such that the file system which is implemented as another process can process the call, and when the call returns, the invoking application is resumed.

In the scope of file systems implemented in user space, the biggest overhead is thus introduced by the huge number of context switches that it requires. The big arrows 1, 2 in Fig. 2 indicate the boundaries that have to be crossed. The vertical arrow 1 indicates the boundary between user space and system space, which has to be crossed for all file system calls, irrespective whether they are implemented in the system space or in user space. The horizontal arrow 2 illustrates the boundary between processes, which is the extra overhead introduced when a file system is implemented in user space.

Now three illustrating examples of a file system usage are described, which will result in a large number of system calls. If the examples are applied to a file system 3 which resides in user space, this will result in an infeasible number of context switches:

b.1) count the elements in a directory:

The following pseudo code illustrates how the number of elements in a directory /foo/bar can be counted. The functions that invoke a system call are indicated bold face.

```
count := 0
dir_handle := opendir('/foo/bar')
while ( readdir(dir_handle) )
{
  count := count + 1
}
closedir(dir_handle)
```

If there are n elements in directory /foo/bar, then the number of system calls invoked by this code fragment is 2+n. If /foo/bar is a directory inside a file system that is implemented in user space, than this results in 2(2+n) context switches.

b.2) count the elements of all direct sub-directories in a directory

This example may seem as a direct result of the previous example, but as will be explained in section d.2, it will be solved slightly different. Though this might look as an artificial problem, this example has a real use case (e.g. the UPnP AV BrowseDirectChildren action).

```
function dirsize(path)
{
  count := 0
  dir_handle := opendir(path)
  while ( readdir(dir_handle) )
  {
      count := count + 1
  }
  closedir(dir_handle)
  return count
}
…
dir_handle := opendir('/foo/bar')
while ( dir_entry := readdir(dir_handle) )
{
  if ( is_dir(dir_entry) )
  {
      count := dirsize(dir_entry->name)
      print "Directory ", dir_entry->name, " has
", count, " elements"
  }
}
closedir(dir_handle)
```

If /foo/bar has n subdirectories with each subdirectory m having mi elements, then this piece of pseudo code invokes $2 + n + \sum_{i=1}^{n}[2 + m_i]$ system calls. If /foo/bar again resides in a user space file system, this will result in $2(2 + n + \sum_{i=1}^{n}[2 + m_i])$ context switches.

b.3) read directory elements from an offset / read a complete directory in chunks

```
function readdir_offset_limit(path, skip, items)
{
  done = true
  skip_count := 0
  dir_handle := opendir(path)
  while ( readdir(dir_handle) && skip_count < skip
)
  {
      skip_count := skip_count + 1
  }
  items_count := 0
  while ( readdir(dir_handle) && items_count <
items )
  {
      items_count := items_count + 1
```

```
       …      /* do something with the result */
          done := false
      }
   closedir(dir_handle)
   return done
}
…
skip := 0
while ( readdir_offset_limit('/foo/bar', skip, N) )
{
   skip := skip + N
}
```

The POSIX file system API does not provide a similar way to seek inside a directory handle, like there is for a file handle. For files, it is possible to set the position indicator to any position in the file. The seek function that is provided for directory handles does only allow to revert to an earlier stored position. Because of this, skipping over directory items can only be accomplished by ignoring items.

Assume that an application needs to read a subset of a directory with many items, and assume that this application is unable to keep the directory handle open. For example, a web page that needs to display the content of a directory in a scroll box, which can only display N elements at a time. Dependent from the position of the scroll bar, the web service should read N items at a certain offset. To display the first N items, the number of context switches are 2(N+2). Reading the next N items, thus skipping N items followed by reading N items, involves 2(2N+2). In total, the number of context switches for reading these 2N directory items are 2(3N+4).

In general, if the directory contains m times N items, then the number of context switches for reading the complete directory with N items at a time is of quadratic order with respect to the number of elements in the directory. For counting the elements of a directory which is, in essence, a linear operation, this is an enormous costly operation. This is illustrated by the calculation:

$$2\sum_{i=1}^{m}[i.N+2] = 4m + 2N\sum_{i=1}^{m}i = 4m + 2N\frac{m(m+1)}{2} = 4m + \frac{2Nm^2 + 2Nm}{2} \cong O(m^2)$$

US6389427 B1 discloses a method and apparatus that enhance the performance of read-only operations in a computer file system. The method can be transparently executed in an operating system after an initial setup is completed. The initial setup involves identifying what directories or files are to be monitored in order to intercept access requests for those files and to respond to those requests with enhanced performance. A system administrator can specify what directories or files are to be monitored. When a monitored file is opened, a file identifier is used, thereby bypassing the access of any directory meta data information. In one embodiment, access to monitored files is enhanced by pinning files in the data cache maintained by the file system cache manager.

US 2008/098023 A1 discloses a method and an apparatus for recording data on or reproducing data from a recording medium. The recording medium comprises a real file system which is converted by a file system acquiring section into a virtual file system having a directory/file structure being different from the directory/file structure on the recording medium, and provides it to an application program.

**BRIEF SUMMARY OF THE INVENTION**

The invention is as set out in the claims 1 and 9.

Preferred embodiments are defined by the dependent claims.

**BRIEF DESCRIPTION OF THE DRAWINGS**

Preferred embodiments of the invention are explained in more detail below by way of example with reference to schematic drawings, which show:

Fig. 1   a file system comprising an operating system and applications, running on a microprocessor system, and

Fig. 2     the file system of Fig. 1, comprising in addition a FUSE kernel module and a FUSE library for providing a file system in user space.

## DETAILED DESCRIPTION OF PREFERRED EMBODIMENTS

A preferred embodiment of the invention is utilized in a residential gateway comprising a microprocessor system including ROM and RAM memory, which runs for example with a Unix-like operating system. The operating system includes applications and utilities representing real files, along with a master control program, the kernel. The method of the present invention proposes to design specialized virtual files to match the required results, make these files available in the file system such that they don't pollute the file system name space and don't interfere with the real files inside the file system. The content of the virtual files depends on the requirements of the users, and as such, the content can be considered as a protocol for which a convention has to be agreed between both parts.

This invention describes therefore a generic method that can be used in file system implementations to avoid that applications making use of such a file system have to emulate the missing functionality with the available application programming interface (API). The invention allows to retrieve information from the file system with a minimal number of system calls, while it requires many system calls to accomplish the same without the invention. As is illustrated by the examples in section b, using the standard API can lead to a large number of system calls. For file systems implemented in user space, the context switches resulting from these system calls can make the file system unusable. The invention reduces the overhead caused by crossing the boundaries between user space and system space, and between processes in user space, to a minimum. In order to not break interoperability, the standardized file system API is obeyed by the invention.

For the examples that are listed in section b before, a possible convention is described in this section:

d.1) count the elements in a directory

A possible convention is that every directory in the virtual file system makes a file available, with as content the number of directory elements (subdirectories, files, symbolic links). A logical name for such a file could be "size", "childcount", "dirsize", .... The problem described in section b.1 can then be solved with the following piece of pseudo code:

```
file_handle := open('/foo/bar@size')
count := read(file_handle)
close(file_handle)
```

This illustrates that the problem can now be solved with only 3 system calls, irrespective of the number of elements inside the directory. In big-o notation, we can say that the problem has been reduced from O(n) to O(1) with respect to the number of system calls. Assuming that the file system implementation has this information, i.e. the number of elements in /foo/bar, at its disposal, then the proposal is in general of complexity O(1).

d.2) count the elements of all direct sub-directories in a directory

A possible convention to count the elements of all direct sub-directories in a directory, is a file which contains on each line the name of a sub-directory, a delimiter character sequence and the number of elements in the subdirectory. A logical name for such a file could be "content", "dircontent", "data", "subsize", ....

```
file_handle := open('/foo/bar@content')
content := read(file_handle)
close(file_handle)
parse(content)
```

Suppose that directory /foo/bar has 3 sub-directories, dir_a, dir_b and dir_c, with respectively 3, 2, and 5 directory elements. Then the file /foo/bar@content could for instance have the following content:

```
dir_a=3
dir_b=2
dir_c=5
```

Compared to the original problem in section b.2, the problem has again been reduced from O(n) to O(1). This explains why this problem is different from the previous, like was stated in section b.2. Without the @content file, the problem would be simpler, but it would still have been of complexity O(n), like illustrated in the next piece of pseudo code:

```
dir_handle := opendir('/foo/bar')
while ( dir_entry := readdir(dir_handle) )
{
  if ( is_dir(dir_entry) )
  {
        file_handle := open(dir_entry->name +
"@content")
        count := read(file_handle)
        close(file_handle)
        print "Directory ", dir_entry->name, " has
", count, " elements"
  }
}
closedir(dir_handle)
```

d.3) read directory elements from an offset / read a complete directory in chunks

A possible convention to read a limited number of elements from a given offset in a directory, is to have a virtual file available with a variable file name, which indicates the offset and limit parameters (e.g. dir_2_10 to read elements 2 to 10). This file can than simply contain the names of the matching elements. A logical name for such a file could be "dir_<from>_<to>", "content_<from>_<to>", "items_<from>_<to>", .... This is illustrated in the following piece of pseudo code:

```
from := 0
to := N
while ( file_handle :=
open('/foo/bar@dir_$from_$to') )
{
  content := read(file_handle)
  close(file_handle)
  from := from + N
  to := to + N
}
```

While the original problem had a complexity of O(n2), this has now been reduced to O(n/N). In the worst case, where the chunk size N is 1, the complexity is O(n). In the best case, where N is at least n, the complexity is again O(1). This best performance will be achieved if there are no memory limitations, such that N can be large, or when directories have a small number of elements most of the time (small values of n).

These examples are only illustrative conventions for the problems described in section b, but the core ideas are by no means limited to these 3 examples.

The other part of the invention is how to make these virtual files available in the virtual file system, such that they don't interfere with the real files in the file system. There are a number of possibilities:

- path extended file names, like illustrated in the examples
  in this implementation, the special virtual files are implemented in the same file system (e.g. if /foo/bar is the path of a directory, then the path /foo/bar@content represents a virtual file). The only disadvantage is that the path length is limited, so it is not always possible to extend a path.

- mirroring file system with virtual files
  one could consider a dedicated mirroring file system to provide the virtual files. Such a mirroring file system can be considered an an overlay over an existing file system, where the virtual files are added to the underlying file system by the mirroring file system.

- extensible plugin file system
  this is a more generic approach for the mirroring file system, where the content of the mirroring file system can dynamically be populated by a plugin interface. A plugin can loaded into such a file system, which can add virtual content to the mirroring file system.

To avoid name collisions between the virtual files and the real files in the file system, a delimiter character or a sequence of delimiter characters can be used to separate the path to a real path from the path to a virtual file. The delimiter character in the examples was for instance '@', or an unlikely sequence like '.@.' to reduce the change for conflicts. E.g.:

- /foo/bar@size
- /foo/bar@content
- /foo/bar@content_1_10

However, for POSIX file systems, there is no character or sequence of characters that cannot occur in path names, except for the path delimiter character itself ('/'). Therefore, the chosen delimiter character, or sequence, has to be escaped in the path to real files. This is a trivial requirement for a virtual file system.

These virtual files can be read with the normal file operations, which requires only three system calls (given that the provided buffer is large enough to contain all the data in the file), or six context switches in the case of a file system implemented in user space. Note that in order to avoid interference, the virtual file system only has to guarantee that the chosen delimiter character does not occur in directory names, which is a trivial requirement for a virtual file system.

The invention has the following advantages:

- the number of system calls invoked for retrieving data from a file system are minimized,

- the invention does not break interoperability, the file system implementing the invention can still be used without any restriction by applications which are not aware of the added functionality,

- no new system calls are required,

- the intermediate libraries which encapsulate the system calls in a function API do not have to be adapted,

- all file system operations will behave as before, no matter if the calls are initiated directly in a shell, from within a shell script, or from within an application, written in whatever programming language,

- the newly introduced virtual files are visible in network shares as well, so remote applications using this network file system can also benefit from the invention,

- the invention is generically applicable, even though only three possible applications are described here,

- the reduction of context switches makes it feasible to implement file systems in user space, while these file systems would otherwise be unusable because of the big overhead, and

- implementing a file system in user space is easier than a file system in system space, which saves development costs.

Also other embodiments of the invention may be utilized by one skilled in the art without departing from the scope of the present invention. The method as described can be used in particular for a residential gateway, but also other appliances like set-top boxes or cell phones utilizing file systems may use the present invention. The invention resides therefore in the claims herein after appended.

## Claims

1. A method for operating a file system included in an apparatus having a user space comprising applications and a system space comprising an operating system with a system call interface to cross a boundary (1) between the user space and the system space, the file system (3)being implemented in the user space and comprising a file directory with real files, the method comprising

retrieving a result from the file directory by opening the virtual file and reading the content of the virtual file wherein a virtual file is created for a file system operation to provide a result from the file directory for which a multitude of system calls would be required, each system call demanding a transition between the user space and the system space, and wherein the virtual file is distinguished by a unique name from the real files of the file directory.

2. Method according to claim 1, comprising the step of updating the result of the virtual file, when the content of the file directory has changed.

3. Method according to claim 1 or 2, wherein the virtual file is distinguished by a unique file extensionfrom the real files of the file directory.

4. Method according to one of the preceding claims, comprising the step of arranging the virtual file inside said file directory.

5. Method according to one of the preceding claims, wherein the virtual file comprises a file system operation for counting the elements of said file directory.

6. Method according to one of the preceding claims, wherein the virtual file comprises a file system operation for counting the elements of all direct sub-directories of said file directory.

7. Method according to one of the preceding claims, wherein the virtual file comprises a file system operation for reading directory elements of said file directory from an offset.

8. Method according to one of the preceding claims, wherein the virtual file comprises a file system operation for reading the complete file directory in chunks.

9. Apparatus for operating a file system comprising a microprocessor system running an operating system including a control program handling the file system, applications and utilities, the apparatus having a user space comprising applications and a system space comprising an operating system with a system call interface to cross a boundary (1) between the user space and the system space, the file system (3) being implemented in the user space and comprising a file directory with real files, wherein the microprocessor is configure to retrieve a result from the file directory by opening the virtual file and reading the content of the virtual file, wherein a virtual file is created for a file system operation to provide a result from the file directory for which a multitude of system calls is required, each system call demanding a transition between the user space and the system space, and wherein the virtual file is distinguished by a unique name from the real files of the file directory.

10. Apparatus according to claim 9, wherein the apparatus is a residential gateway, a DSL modem or a set-top box.


**Patentansprüche**

1. Verfahren zum Betreiben eines Dateisystems, das in einer Vorrichtung enthalten ist, die einen Benutzerraum, der Anwendungen umfasst, und einen Systemraum, der ein Betriebssystem mit einer Systemaufrufschnittstelle zum Überqueren einer Grenze (1) zwischen dem Benutzerraum und dem Systemraum umfasst, aufweist, wobei das Dateisystem (3) in dem Benutzerraum implementiert ist und ein Dateiverzeichnis mit realen Dateien umfasst, wobei das Verfahren Folgendes umfasst:

Abrufen eines Ergebnisses von dem Dateiverzeichnis durch Öffnen der virtuellen Datei und Lesen des Inhalts der virtuellen Datei, wobei eine virtuelle Datei für einen Dateisystembetrieb erzeugt wird, um ein Ergebnis von dem Dateiverzeichnis bereitzustellen, für das eine Vielzahl von Systemaufrufen erfordert würde, wobei jeder Systemaufruf einen Übergang zwischen dem Benutzerraum und dem Systemraum verlangt, und wobei die virtuelle Datei sich durch einen einzigartigen Namen von den realen Dateien des Dateiverzeichnisses unterscheidet.

2. Verfahren nach Anspruch 1, umfassend den Schritt eines Aktualisierens des Ergebnisses der virtuellen Datei, wenn der Inhalt des Dateiverzeichnisses sich geändert hat.

3. Verfahren nach Anspruch 1 oder 2, wobei die virtuelle Datei sich durch eine einzigartige Dateinamenserweiterung von den realen Dateien des Dateiverzeichnisses unterscheidet.

4. Verfahren nach einem der vorhergehenden Ansprüche, umfassend den Schritt eines Anordnens der virtuellen Datei in dem Dateiverzeichnis.

5. Verfahren nach einem der vorhergehenden Ansprüche, wobei die virtuelle Datei einen Dateisystembetrieb zum Zählen der Elemente des Dateiverzeichnisses umfasst.

6. Verfahren nach einem der vorhergehenden Ansprüche, wobei die virtuelle Datei einen Dateisystembetrieb zum Zählen der Elemente aller direkten Unterverzeichnisses des Dateiverzeichnisses umfasst.

7. Verfahren nach einem der vorhergehenden Ansprüche, wobei die virtuelle Datei einen Dateisystembetrieb zum Lesen von Verzeichniselementen des Dateiverzeichnisses von einem Versatz umfasst.

8. Verfahren nach einem der vorhergehenden Ansprüche, wobei die virtuelle Datei einen Dateisystembetrieb zum Lesen des kompletten Dateiverzeichnisses in Segmenten umfasst.

9. Vorrichtung zum Betreiben eines Dateisystems, die ein Mikroprozessorsystem umfasst, das ein Betriebssystem ausführt, das ein Steuerprogramm enthält, das das Dateisystem, Anwendungen und Dienstprogramme abwickelt, wobei die Vorrichtung einen Benutzerraum, der Anwendungen umfasst, und einen Systemraum, der ein Betriebssystem mit einer Systemaufrufschnittstelle zum Überqueren einer Grenze (1) zwischen dem Benutzerraum und dem Systemraum umfasst, aufweist, wobei das Dateisystem (3) in dem Benutzerraum implementiert ist und ein Dateiverzeichnis mit realen Dateien umfasst, wobei der Mikroprozessor dazu konfiguriert ist, ein Ergebnis von dem Dateiverzeichnis durch Öffnen der virtuellen Datei und Lesen des Inhalts der virtuellen Datei abzurufen, wobei eine virtuelle Datei für einen Dateisystembetrieb erzeugt wird, um ein Ergebnis von dem Dateiverzeichnis bereitzustellen, für das eine Vielzahl von Systemaufrufen erfordert wird, wobei jeder Systemaufruf einen Übergang zwischen dem Benutzerraum und dem Systemraum verlangt, und wobei die virtuelle Datei sich durch einen einzigartigen Namen von den realen Dateien des Dateiverzeichnisses unterscheidet.

10. Vorrichtung nach Anspruch 9, wobei die Vorrichtung ein Residential Gateway, ein DSL-Modem oder ein Digitalempfänger ist.

**Revendications**

1. Procédé permettant d'exploiter un système de fichiers inclus dans un appareil ayant un espace utilisateur comprenant des applications et un espace système comprenant un système d'exploitation avec une interface d'appel système pour traverser une frontière (1) entre l'espace utilisateur et l'espace système, le système de fichiers (3) étant mis en oeuvre dans l'espace utilisateur et comprenant un répertoire de fichiers avec des fichiers réels, le procédé comprenant l'étape consistant à

récupérer un résultat à partir du répertoire de fichiers en ouvrant le fichier virtuel et en lisant le contenu du fichier virtuel où un fichier virtuel est créé pour une opération de système de fichiers afin de fournir un résultat à partir du répertoire de fichiers pour lequel une multitude d'appels système serait requise, chaque appel système nécessitant une transition entre l'espace utilisateur et l'espace système, et où le fichier virtuel se différencie par un nom unique des fichiers réels du répertoire de fichiers.

2. Procédé selon la revendication 1, comprenant l'étape de mise à jour du résultat du fichier virtuel lorsque le contenu du répertoire de fichiers a changé.

3. Procédé selon la revendication 1 ou 2, dans lequel le fichier virtuel se différencie par une extension de fichier unique des fichiers réels du répertoire de fichiers.

4. Procédé selon l'une des revendications précédentes, comprenant l'étape d'agencement du fichier virtuel dans ledit répertoire de fichiers.

5. Procédé selon l'une des revendications précédentes, dans lequel le fichier virtuel comprend une opération de système de fichiers pour comptabiliser les éléments dudit répertoire de fichiers.

6. Procédé selon l'une des revendications précédentes, dans lequel le fichier virtuel comprend une opération de système de fichiers pour comptabiliser les éléments de tous les sous-répertoires directs dudit répertoire de fichiers.

7. Procédé selon l'une des revendications précédentes, dans lequel le fichier virtuel comprend une opération de système de fichiers pour lire les éléments de répertoire dudit répertoire de fichiers à partir d'un décalage.

8. Procédé selon l'une des revendications précédentes, dans lequel le fichier virtuel comprend une opération de système de fichiers pour lire l'ensemble du répertoire de fichiers par blocs.

9. Appareil permettant d'exploiter un système de fichiers comprenant un système de microprocesseur exécutant un système d'exploitation incluant un programme de contrôle qui gère le système de fichiers, les applications et les utilitaires, l'appareil ayant un espace utilisateur comprenant des applications et un espace système comprenant un système d'exploitation avec une interface d'appel système pour traverser une frontière (1) entre l'espace utilisateur et l'espace système, le système de fichiers (3) étant mis en oeuvre dans l'espace utilisateur et comprenant un répertoire de fichiers avec des fichiers réels, dans lequel le microprocesseur est configuré pour récupérer un résultat à partir du répertoire de fichiers en ouvrant le fichier virtuel et en lisant le contenu du fichier virtuel, dans lequel un fichier virtuel est créé pour une opération de système de fichiers afin de fournir un résultat à partir du répertoire de fichiers pour lequel une multitude d'appels système est requise, chaque appel système nécessitant une transition entre l'espace utilisateur et l'espace, et dans lequel le fichier virtuel se différencie par un nom unique des fichiers réels du répertoire de fichiers.

10. Appareil selon la revendication 9, dans lequel l'appareil est une passerelle résidentielle, un modem DSL ou un boîtier décodeur.

**Fig. 1**

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6389427 B1
- US 2008098023 A1